# EUROPÄISCHE PATENTSCHRIFT

(11) **EP 1 637 432 B1**
(45) Veröffentlichungstag und Bekanntmachung des Hinweises auf die Patenterteilung: **03.10.2007**
(21) Anmeldenummer: 05017354.1
(22) Anmeldetag: 10.08.2005
(51) Int. Cl.: B62D 1/16

(54) **Befestigungseinrichtung für ein Lenkstockmodul eines Kraftfahrzeuges**
Mounting device for a steering column module of a motor vehicle
Dispositif de fixation pour un module de colonne de direction d'un véhicule automobile

(30) Priorität: 20.09.2004 DE 102004045876
(43) Veröffentlichungstag der Anmeldung: 22.03.2006
(73) Patentinhaber: Delphi Technologies Inc., Troy, MI 48007 (US)
(72) Erfinder: Rudolph, Gerd, 55459 Aspisheim (DE); Schönleber, Jörg, 55413 Manubach (DE); Kürschner, Sven, 55597 Wöllstein (DE); Kunz, Hans-Peter, 55422 Breitscheid (DE)
(74) Vertreter: Becker, Bernd

(56) Entgegenhaltungen:
- EP-A- 0 826 574
- DE-A1- 2 438 654
- DE-B3- 10 259 167

## Beschreibung

Die Erfindung bezieht sich auf eine Befestigungseinrichtung für ein Lenkstockmodul eines Kraftfahrzeuges mit einem mit einem im Wesentlichen rohrförmigen Befestigungsflansch gekoppelten Gehäuseunterteil, das an einem Mantelrohr einer Lenkspindel festgelegt ist, wobei der Befestigungsflansch mindestens einen federbelasteten Raststein aufweist, der in einer Befestigungsposition des Befestigungsflansches in eine zugeordnete radiale Ausnehmung des Mantelrohrs eingreift, und ein Befestigungsverfahren dazu.

Eine derartige Befestigungseinrichtung ist aus der EP 0 826 574 A2 bekannt.

Lenkstockmodule sind Schaltermodule, die im Bereich des Mantelrohrs der Lenkspindel eines Kraftfahrzeuges - und üblicherweise konzentrisch dazu - angeordnet sind. Lenkstockmodule tragen bspw. Lenkstockschalter und dergleichen, wobei, je nach Ausgestaltung, ebenfalls so genannte CIM (column integrated modules)-Bausteine, wie eine -Wickelfederkassette, ein Lenkwinkelsensor o.Ä., Teile eines Lenkstockmoduls sein können.

Aus der DE 102 44 245 A1 ist eine Befestigungseinrichtung für ein Lenkstockmodul bekannt, die ein Klemmglied zum Festlegen des Lenkstockmoduls an dem Mantelrohr der Lenkspindel eines Kraftfahrzeuges aufweist. Die Klemmkraft wird durch eine Relativbewegung zwischen dem Lenkstockmodul und dem Mantelrohr erzeugt. Nachteilig ist hierbei die schwierige Montier- und Demontierbarkeit des Lenkstockmoduls bei der Produktion bzw. zu Wartungs- oder Reparaturzwecken, was einen Mehraufwand an Zeit und Kosten erfordert. Aufgrund der reibschlüssigen Befestigungsstrategie kann das Lenkstockmodul bei der Montage leicht verrutschen, weshalb dessen exakte Ausrichtung schlecht erreichbar bzw. korrigierbar ist. Zudem können beim Lösen der Verbindung Teile beschädigt werden, die zeit- und kostenaufwendig ausgetauscht werden müssen.

Es ist Aufgabe der Erfindung, eine Befestigungseinrichtung der eingangs genannten Art bereitzustellen, die eine leichte und schnelle Montier- und Demontierbarkeit eines Lenkstockmoduls erlaubt und die einfach und kostengünstig aufgebaut ist. Weiterhin ist es Aufgabe der Erfindung, ein entsprechendes Verfahren anzugeben.

Die Aufgabe wird erfindungsgemäß bei einer Befestigungseinrichtung dadurch gelöst, dass der Raststein radial verschiebbar gelagerten ist, dem ein als Blattfeder ausgebildetes Federelement zugeordnet ist.

Ein wesentlicher Vorteil dieser Lösung besteht darin, dass dieser eine Befestigungsstrategie auf Basis eines Rastmechanismus zugrunde liegt. Der Befestigungsflansch kann durch einen Werker leicht an dem Mantelrohr ausgerichtet werden, indem der Raststein mit der entsprechenden Ausnehmung im Mantelrohr in Deckung gebracht wird, womit die Position des Befestigungsflanschs eindeutig festgelegt ist.

Zweckmäßigerweise liegt der Raststein derart in der Ausnehmung ein, dass eine Verdrehung und axiale Verschiebung des Befestigungsflansches gegen das Mantelrohr verhindert ist.

In weiterer Ausgestaltung wirkt das Gehäuseunterteil in der Befestigungsposition derart mit dem Befestigungsflansch zusammen, dass der Raststein gegen ein Herausrutschen aus seiner Eingriffslage durch einen Sicherungsanschlag blockiert ist. Bevorzugt liegt der Raststein in der Befestigungsposition an dem Mantelrohr gegen einen Verriegelungsanschlag an. Damit wird die Verbindung zwischen dem Befestigungsflansch und dem Mantelrohr erst durch z.B. Auf- oder Einstecken, Verschrauben o.Ä. des Gehäuseunterteils mit dem Befestigungsflansch gesichert, indem der Raststein gegen Herausrutschen blockiert wird. Eine verhältnismäßig leichte Demontage der Verbindung ist durch die Umkehrung der Montasgereihenfolge gegeben.

Bei einer vorteilhaften Weiterbildung weist der Raststein eingriffsseitige Schrägen auf, die derart angeordnet und bemessen sind, dass der Raststein beim Montieren und Demontieren des Befestigungsflansches an dem Mantelrohr aus seiner Eingriffslage gedrückt wird. Einem Werker wird dadurch einerseits ein Auf- oder Einstecken des Befestigungsflansches auf oder in das Mantelrohr erleichtert. Im Weiteren ist auch ein Abziehen des Befestigungsflansches aus seiner Befestigungsposition am Mantelrohr vereinfacht. In beiden Fällen wird der Raststein durch die Außenfläche des Mantelrohrs in eine Montagelage am Befestigungsflansch gebracht, die eine leichte Führung desselben am Mantelrohr ermöglicht. Die Eingriffsseite des Raststeins kann dabei pfeilförmig ausgebildet sein, wobei die Pfeilung der beidseitigen Schrägen vorzugsweise zwischen 10° und 60° liegt. Die Ausnehmung ist als axial am Mantelrohr ausgeführtes Langloch ausgebildet.

In weiterer Ausgestaltung sind zwei diametral gegenüberliegende Raststeine vorgesehen. Eine vorteilhafte Weiterbildung sieht ein Federelement vor, das jeweils einem Raststein zugeordnet ist und durch das der Raststein elastisch federnd in seine Eingriffslage gedrückt wird. Dadurch wird der Eingriff der Raststeine in die zugeordneten langlochförmigen Ausnehmungen unterstützt und dem Werker ein Auffinden der exakten Ausrichtung des Lenkstockmoduls - auch unter schwierigen Montagebedingungen - erleichtert. Gleichzeitig wird der Raststein in der Ausnehmung gehalten, wodurch ein leichtes Aufstecken des Gehäuseunterteils gewährleistet ist. Weiterhin gleicht die federnde Lagerung der Raststeine in den Ausnehmungen Toleranzen auf Grund radialen Spiels zwischen Mantelrohr und Befestigungsflansch aus.

Vorteilhafterweise ist die Blattfeder an dem Gehäuseunterteil ausgebildet und drückt beim Verbinden des Gehäuseunterteils mit dem Befestigungsflansch den jeweiligen Raststein elastisch federnd in seine Eingriffslage. Durch die Integration der Federelemente in das Gehäuseunterteil reduziert sich die Komplexität des Befestigungsflansches. Durch leichtes Aufstecken des Gehäuseunterteils auf den Befestigungsflansch kann bereits eine erste Vorspannung auf die Raststeine aufgebracht werden, so dass auch die vorstehend erwähnte Unterstützung des Werkers beim Auffinden der Ausnehmungen gewährleistet ist. Schließlich werden bei vollständigem Aufstecken des Gehäuseunterteils die Raststeine mit der vorgesehenen Federkraft beaufschlagt.

Bevorzugt übergreift die Blattfeder eine Endseite des Raststeins federnd, um diesen aus einer Montage- in die Eingrifflage zu drücken, wobei sich der Raststein in der Montagelage nicht in Eingriff mit dem Mantelrohr befindet. Grundsätzlich ist es auch möglich, einen Raststein mit einer Durchgangsöffnung zu versehen, um die zugeordnete Blattfeder darin zu führen. Dadurch erhöht sich aber die konstruktive Komplexität der Verbindung. Greift die Blattfeder aber an der Endseite an, die als die der Eingriffsseite abgewandte Seite des Raststeins bezeichnet ist, ist keine wesentliche Umgestaltung des Raststeins an dieser Stelle notwendig.

Vorzugsweise weist der Raststein wenigstens eine endseitige Schräge auf, die derart angeordnet und bemessen ist, dass das Federelement an dem Raststein geführt ist. Dadurch wird ein Verkanten des Federelementes an der Endseite des Raststeins verhindert, das an der Schräge des Raststeins gleitend ausgelenkt wird und den Raststein aus seiner Montagein seine Eingriffslage verschiebt.

Bei einer Weiterbildung ist vorgesehen, dass das Federelement in der Befestigungsposition des Gehäuseunterteils an dem Befestigungsflansch derart gegen einen Arretierungsanschlag anliegt, dass seine Auslenkung blockiert und der Raststein gegen Herausrutschen aus seiner Eingriffslage gesichert ist. Damit integriert das Federelement zwei Funktionen, nämlich zum einen die elastische Betätigung des Raststeins und zum anderen dessen Sicherung gegen unerwünschtes Lösen der Verbindung. Liegt das Federelement gegen den Arretierungsanschlag an, bildet es den Sicherungsanschlag gegen Lösen des jeweils zugeordneten Raststeins aus seiner Eingriffslage am Mantelrohr. Die Doppelfunktion des Federelementes vereinfacht den konstruktiven Aufbau der Verbindung, da sich ein zusätzlicher, vom Federelement getrennter Sicherungsanschlag erübrigt. Gleichzeitig wird mit einem Montagevorgang, nämlich z.B. dem Aufstecken des Gehäuseunterteils, die entstehende Verbindung geschaffen (Drücken der Raststeine in die Ausnehmungen) und gesichert (Bilden eines Sicherungsanschlags durch Arretierung der Federelemente).

Nach einer vorteilhaften Weiterbildung weist der Raststein wenigstens einen Vorsprung mit Schrägen auf, der mit jeweils einem Bolzen des Gehäuseunterteils zusammenwirkt, um beim Montieren und Demontieren des Gehäuseunterteils an dem Befestigungsflansch den Raststein zwangsweise aus seiner Eingriffslage zu verlagern. Damit wird ein Demontieren des Gehäuseunterteils vom Mantelrohr erheblich erleichtert. Beim Abziehen des Gehäuseunterteils von dem Befestigungsflansch gleiten die Bolzen an den Schrägen des Vorsprungs entlang, deren Steigung so gewählt ist, dass die Raststeine bei dieser Bewegung aus ihrer Eingriffslage gezogen werden. Eine spiegelbildliche Schräge kann am Vorsprung vorgesehen sein, um die Bolzen beim Aufstecken des Gehäuseunterteils - ebenfalls unter Bewegung der Raststeine in ihre Montagelage - passieren zu lassen. Zweckmäßigerweise ist ein Steigungswinkel der Schrägen zwischen 10° und 60° vorzusehen.

Vorzugsweise ist mindestens einem der Raststeine ein Montagestift zugeordnet, der jede Bewegung des Raststeins nachvollzieht und an dessen Position an einer Außenseite des Gehäuseunterteils die Lage des Raststeins ablesbar ist. Dadurch wird eine optische und haptische Kontrolle der korrekten Montage des Lenkstockmoduls am Mantelrohr von außen möglich, was unter Qualitäts- und Sicherheitsaspekten von Bedeutung ist.

Bei einer weiteren Ausführung sind Federelemente vorgesehen, die nach einem Lösen des Raststeins aus der Eingriffslage an dem Mantelrohr das Gehäuseunterteil von dem Befestigungsflansch wegdrücken. Das Lösen des Gehäuseunterteils vom Befestigungsflansch, insbesondere z.B. gegen die arretierende Wirkung der Blattfeder, wird dadurch für den Werker erheblich erleichtert. Das Gehäuseunterteil lässt sich leicht vom Befestigungsflansch entfernen und in der Folge auch dieser vom Mantelrohr.

Die Aufgabe der Erfindung wird auch gelöst durch ein Befestigungsverfahren für ein Lenkstockmodul eines Kraftfahrzeuges an einem Mantelrohr einer Lenkspindel, insbesondere unter Verwendung der zuvor erläuterten Befestigungseinrichtung, bei dem das Lenkstockmodul einen Befestigungsflansch und ein damit verbindbares Gehäuseunterteil umfasst und in einem ersten Schritt eine verdreh- und verschiebefeste erste Verbindung zwischen dem Befestigungsflansch und dem Mantelrohr hergestellt wird und in einem zweiten Schritt eine formschlüssige Verbindung zwischen Gehäuseunterteil und Befestigungsflansch hergestellt wird, die die erstgenannte Verbindung gegen unerwünschtes Lösen sichert.

Ein wesentlicher Vorteil des Befestigungsverfahrens besteht in der entkoppelten zweistufigen Verbindung (Rast- und Sicherungsverbindung), die durch Lösen der zweiten Verbindung (Demontieren des Gehäuseunterteils) wieder leicht lösbar ist und zwar ohne Einbußen in der Qualität der Ausrichtung einzelner Teile oder deren Verlust durch Beschädigung.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörigen Zeichnungen näher erläutert. Gleiche oder gleich wirkende Teile sind mit gleichen Bezugsziffern versehen. Es zeigt:
- Fig. 1: eine Explosionsdarstellung einer erfindungsgemäßen Befestigungseinrichtung,
- Fig. 2: eine axial geschnittene Ansicht der Befestigungseinrichtung nach Fig. 1 mit einer Lenkspindel sowie deren Lagerung und
- Fig. 3: eine geschnittene Draufsicht auf die Befestigungseinrichtung nach Fig. 2 entlang der Linie N - N.

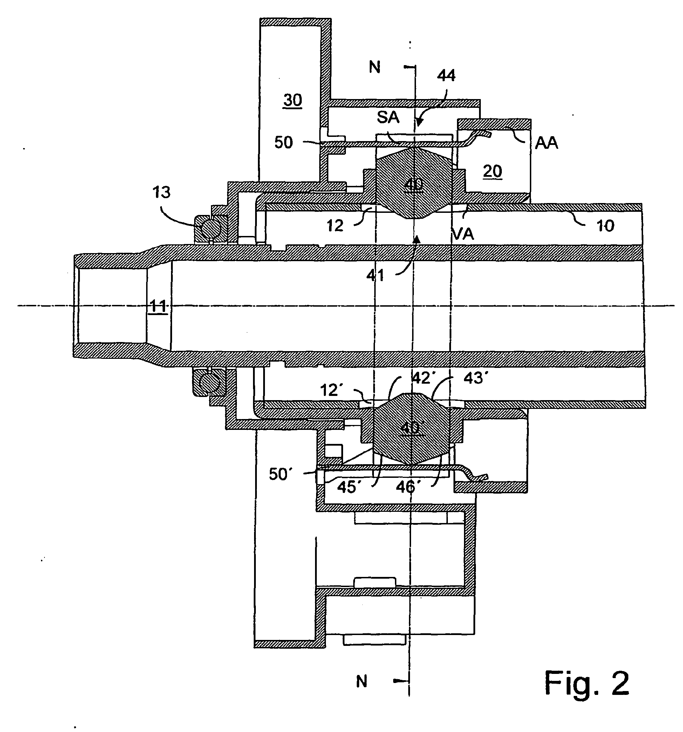

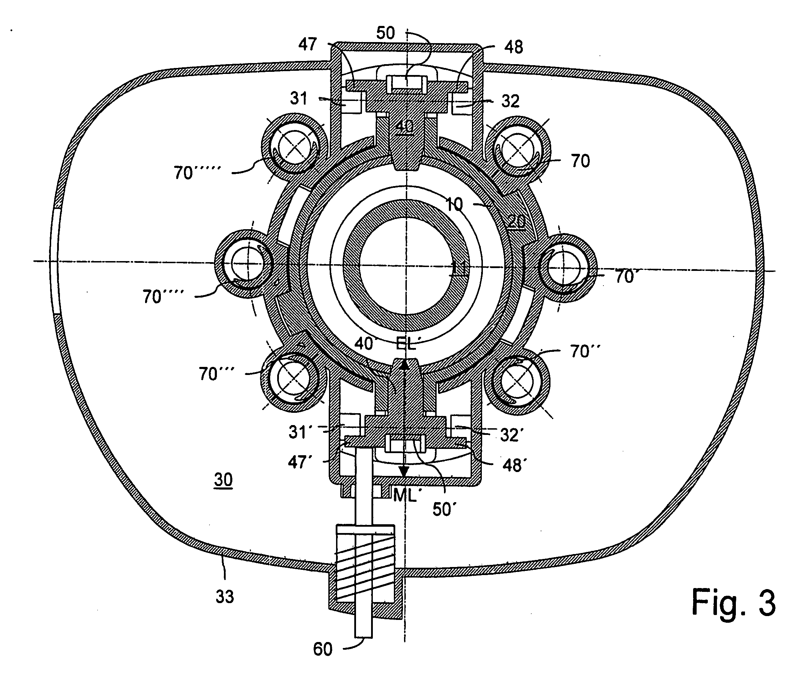

An einem Mantelrohr 10 einer Lenkspindel 11 (Fig. 2 und 3) ist ein Lenkstockmodul befestigt, das einen Befestigungsflansch 20 und ein damit verbindbares Gehäuseunterteil 30 umfasst. Nach Aufschieben des Befestigungsflansches 20 auf das Mantelrohr 10 greifen Raststeine 40, 40', die radial verschiebbar an dem Befestigungsflansch 20 gehalten sind, in Ausnehmungen 12, 12' (Fig. 2) an dem Mantelrohr 10 ein. Die Ausnehmungen 12, 12' sind als in axialer Richtung zum Mantelrohr 10 ausgerichtete Langlöcher ausgestaltet. Dabei gleiten beim Aufklippen des Gehäuseunterteils 30 auf den Befestigungsflansch 20 als Blattfedern ausgebildete Federelemente 50, 50', die mit dem Unterteil 30 verbunden sind, elastisch federnd ausgelenkt über eine Endseite 44, 44' (Fig. 2) der Raststeine 40, 40'. Die Federelemente 50, 50' drücken die Raststeine 40, 40' in eine Eingriffslage EL, EL' (Fig. 3) mit den Ausnehmungen 12, 12'. Damit ist das Lenkstockmodul am Mantelrohr 10 gegen Drehung und Verschiebung festgelegt.

Zur Wahrung der Übersichtlichkeit in den Fig. 2 und 3 sind Bezugsziffern radial symmetrisch angeordneter Bauteile nur einseitig eingetragen.

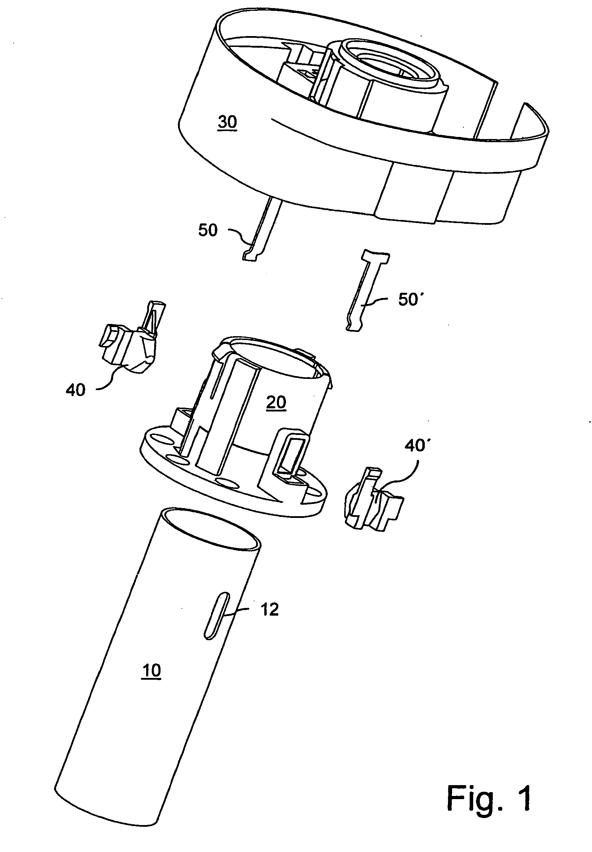

In Fig. 2 ist die axial geschnittene Ansicht der Befestigungseinrichtung nach Fig. 1 mit der Lenkspindel 11 und deren Lagerung 13 dargestellt. Das linke Ende der Lenkspindel 11 trägt das später zu montierende Lenkrad. Der Befestigungsflansch 20 und das Gehäuseunterteil 30 sind an dem Mantelrohr 10 befestigt und die Raststeine 40, 40' befinden sich gegen einen Verriegelungsanschlag VA, VA' in Eingriff mit den Ausnehmungen 12, 12'. Eine Eingriffsseite 41, 41' jedes Raststeins 40, 40' weist Schrägen 42, 43, 42', 43' auf, die pfeilförmig angeordnet und so bemessen sind, dass der jeweilige Raststein 40, 40' durch Abziehen des Gehäuseunterteils 30 vom Befestigungsflansch 20 aus seiner Eingriffslage EL, EL' in eine Montagelage ML, ML' (Fig. 3) gebracht wird. Beide Raststeine 40, 40' sind gegen Herausrutschen aus der Eingriffslage EL, EL' an ihren Endseiten 44, 44' gegen einen Sicherungsanschlag SA, SA' blockiert, welcher durch die Federelemente 50, 50' gebildet wird, die wiederum gegen einen Arretierungsanschlag AA, AA' anliegen. Beim Abziehen des Gehäuseunterteils 30 von dem Befestigungsflansch 20 wird die Arretierung der Blattfedern 50, 50' gegen den Arretierungsanschlag AA, AA' aufgehoben. Diese gleiten elastisch federnd ausgelenkt entlang einer Schräge 45, 45' über die Endseiten 44, 44' jedes Raststeins 40, 40'.

In der geschnittenen Draufsicht nach Fig. 3 auf die Befestigungseinrichtung gemäß der Fig. 2 entlang der Linie N - N sind Bolzen 31, 32, 31', 32' des Gehäuseunterteils 30 sichtbar, die im befestigten Zustand des Lenkstockmoduls unter Vorsprüngen 47, 48, 47', 48' der Raststeine 40, 40' liegen und diese aus ihrer Eingriffslage EL, EL' mit den Ausnehmungen 12, 12' an dem Mantelrohr 10 in eine Montagelage ML, ML' drücken, womit das Gehäuseunterteil 30 vom Befestigungsflansch 20 freigegeben wird. Ein Abziehen des Gehäuseunterteils wird durch die Kraft von Federelementen 70 bis 70""" unterstützt, die im befestigten Zustand des Lenkstockmoduls zusammengedrückt werden und sich beim Entriegeln der Raststeine 40, 40' aus ihrer Eingriffslage EL, EL' entspannen können. Die jeweilige Lage der Raststeine 40, 40' und damit die Sicherung des Befestigungsflansches 20 am Mantelrohr 10 kann über einen federnd gelagerten Montagestift 60 kontrolliert werden, der jede Bewegung des Raststeins 40' nachvollzieht und dessen entsprechende Position von einer Außenseite 33 des Gehäuseunterteils 30 sichtbar ist.

Der zweigeteilte Aufbau in Befestigungsflansch 20 und Gehäuseunterteil 30 lässt eine leichte und schnelle, verschleißfreie sowie präzise Montage und Demontage der Befestigungseinrichtung für ein Lenkstockmodul an dem Mantelrohr 10 eines Kraftfahrzeuges zu. Die Befestigungseinrichtung ist dabei einfach aufgebaut, wodurch sie z.B. aus einem Kunststoff einfach und kostengünstig herstellbar ist.

## Patentansprüche

1. Befestigungseinrichtung für ein Lenkstockmodul eines Kraftfahrzeuges mit einem mit einem im Wesentlichen rohrförmigen Befestigungsflansch (20) gekoppelten Gehäuseunterteil (30), das an einem Mantelrohr (10) einer Lenkspindel (11) festgelegt ist, wobei der federbelasteten Befestigungsflansch (20) mindestens einen Raststein (40, 40') aufweist, der in einer Befestigungsposition des Befestigungsflansches (20) in eine zugeordnete radiale Ausnehmung (12, 12') des Mantelrohrs (10) eingreift, **dadurch gekennzeichnet, dass** der Raststein (40, 40') radial verschiebbar gelagert ist, dem ein als Blattfeder ausgebildetes Federelement (50, 50') zugeordnet ist.

2. Befestigungseinrichtung nach Anspruch 1, **dadurch gekennzeichnet, dass** der Raststein (40, 40') derart in der Ausnehmung (12, 12') einliegt, dass eine Verdrehung und axiale Verschiebung des Befestigungsflanschs (20) gegen das Mantelrohr (10) verhindert ist.

3. Befestigungseinrichtung nach Anspruch 1 oder 2, **dadurch gekennzeichnet, dass** das Gehäuseunterteil (30) in der Befestigungsposition derart mit dem Befestigungsflansch (20) zusammenwirkt, dass der Raststein (40, 40') gegen ein Herausrutschen aus seiner Eingriffslage (EL, EL') durch einen Sicherungsanschlag (SA, SA') blockiert ist.

4. Befestigungseinrichtung nach einem der Ansprüche 1 bis 3, **dadurch gekennzeichnet, dass** der Raststein (40, 40') in der Befestigungsposition an dem Mantelrohr (10) gegen einen Verriegelungsanschlag (VA, VA') anliegt.

5. Befestigungseinrichtung nach einem der Ansprüche 1 bis 4, **dadurch gekennzeichnet, dass** der Raststein (40, 40') eingriffsseitige Schrägen (41, 42, 41', 42') aufweist, die derart angeordnet und bemessen sind, dass der Raststein (40, 40') beim Montieren und Demontieren des Befestigungsflanschs (20) an dem Mantelrohr (10) aus seiner Eingrifflage (EL, EL') gedrückt wird.

6. Befestigungseinrichtung nach einem der Ansprüche 1 bis 5, **dadurch gekennzeichnet, dass** zwei diametral gegenüberliegende Raststeine (40, 40') vorgesehen sind.

7. Befestigungseinrichtung nach einem der Ansprüche 1 bis 6, **dadurch gekennzeichnet, dass** jeweils einem Raststein (40, 40') eine Blattfeder zugeordnet ist, durch die der Raststein (40, 40') elastisch federnd in seine Eingriffslage (EL, EL') gedrückt wird.

8. Befestigungseinrichtung nach Anspruch 7, **dadurch gekennzeichnet, dass** die Blattfeder an dem Gehäuseunterteil (30) ausgebildet ist und beim Verbinden des Gehäuseunterteils (30) mit dem Befestigungsflansch (20) den jeweiligen Raststein (40, 40') beaufschlagt.

9. Befestigungseinrichtung nach Anspruch 8, **dadurch gekennzeichnet, dass** die Blattfeder eine Endseite (44, 44') des Raststeins (40, 40') federnd übergreift, um diesen aus einer Montagelage (ML, ML') in die Eingriffslage (EL, EL') zu drücken, wobei sich der Raststein (40, 40') in der Montagelage (ML, ML') nicht in Eingriff mit dem Mantelrohr (10) befindet.

10. Befestigungseinrichtung nach einem der Ansprüche 7 bis 9, **dadurch gekennzeichnet, dass** der Raststein (40, 40') wenigstens eine endseitige Schräge (45, 46, 45', 46') aufweist, die derart angeordnet und bemessen ist, dass das Federelement (50, 50') an dem Raststein (40, 40') geführt ist.

11. Befestigungseinrichtung nach einem der Ansprüche 7 bis 10, **dadurch gekennzeichnet, dass** das Federelement (50, 50') in der Befestigungsposition des Gehäuseunterteils (30) derart gegen einen Arretierungsanschlag (AA, AA') anliegt, dass seine Auslenkung blockiert und der Raststein (40, 40') gegen Herausrutschen aus seiner Eingriffslage (EL, EL') gesichert ist.

12. Befestigungseinrichtung nach einem der Ansprüche 1 bis 11, **dadurch gekennzeichnet, dass** der Raststein (40, 40') wenigstens einen Vorsprung (47, 48, 47', 48') mit Schrägen aufweist, der mit jeweils einem Bolzen (31, 32, 31', 32') des Gehäuseunterteils (30) zusammenwirkt, um beim Demontieren des Gehäuseunterteils (30) von dem Befestigungsflansch (20) den Raststein (40, 40') zwangsweise aus seiner Eingriffslage (EL, EL') zu verlagern.

13. Befestigungseinrichtung nach einem der Ansprüche 1 bis 12, **dadurch gekennzeichnet, dass** mindestens einem der Raststeine (40, 40') ein Montagestift (60) zugeordnet ist, der die Bewegung des Raststeins (40, 40') nachvollzieht und an dessen Position an einer Außenseite (33) des Gehäuseunterteils (30) die Lage des Raststeins (40, 40') ablesbar ist.

14. Befestigungseinrichtung nach einem der Ansprüche 1 bis 13, **dadurch gekennzeichnet, dass** Federelemente (70 bis 70""') vorgesehen sind, die nach einem Lösen des Raststeins (40, 40') aus der Eingriffslage an dem Manelrohr (10) das Gehäuseunterteil (30) von dem Befestigungsflansch (20) wegdrücken.

15. Befestigungsverfahren für ein Lenkstockmodul eines Kraftfahrzeuges an einem Mantelrohr (10) seiner Lenkspindel (11), insbesondere unter Verwendung einer Befestigungseinrichtung nach einem der Ansprüche 1 bis 14, bei dem das Lenkstockmodul einen Befestigungsflansch (20) und ein damit verbindbares Gehäuseunterteil (30) umfasst und in einem ersten Schritt eine vierdreh- und verschiebefeste erste Verbindung zwischen dem Befestigungsflansch (20) und dem Mantelrohr (10) hergestellt wird und in einem zweiten Schritt eine formschlüssige Verbindung zwischen Gehäuseunterteil (30) und Befestigungsflansch (20) hergestellt wird, die die erstgenannte Verbindung gegen unerwünschtes Lösen sichert.

## Claims

1. Fastening device for a steering column module of a motor vehicle having a housing lower part (30) that is linked to a substantially tubular fastening flange (20) and fixed on a jacket tube (10) of a steering spindle (11), wherein the fastening flange (20) comprises at least one spring-loaded stop block (40, 40') which in a fastening position of the fastening flange (20) engages in an assigned radial recess (12, 12') of the jacket tube (10), **characterised in that** the stop block (40, 40') is mounted in radially displaceable manner to which a spring element (50, 50') constructed in the form of a leaf spring is assigned.

2. Fastening device according to claim 1, **characterised in that** the stop block (40, 40') lodges in the recess (12, 12') in such a way that twisting and axial displacement of the fastening flange (20) against the jacket tube (10) is impeded.

3. Fastening device according to claim 1 or 2, **characterised in that** the housing lower part (30) in the fastening position acts in conjunction with the fastening flange (20) in such a way that the stop block (40, 40') is blocked against sliding out of its position of engagement (EL, EL') by a securing stop (SA, SA').

4. Fastening device according to any of claims 1 to 3, **characterised in that** the stop block (40, 40') in the fastening position on the jacket tube (10) rests against a locking stop (VA, VA').

5. Fastening device according to any of claims 1 to 4, **characterised in that** the stop block (40, 40') comprises oblique surfaces (41, 42, 41', 42') which are arranged in such a way and of such a size that when the fastening flange (20) is being assembled and disassembled the stop block (40, 40') is pushed out of its position of engagement (EL, EL') on the jacket tube (10).

6. Fastening device according to any of claims 1 to 5, **characterised in that** two diametrically opposite stop blocks (40, 40') are provided.

7. Fastening device according to any of claims 1 to 6, **characterised in that** to each stop block (40, 40') a leaf spring is assigned by means of which the stop block (40, 40') is pushed in elastically sprung manner into its position of engagement (EL, EL').

8. Fastening device according to claim 7, **characterised in that** the leaf spring is constructed on the housing lower part (30) and on joining the housing lower part (30) to the fastening flange (20) acts upon the stop block (40, 40') in question.

9. Fastening device according to claim 8, **characterised in that** the leaf spring engages elastically over an end side (44, 44') of the stop block (40, 40') in order to push the latter out of an assembly position (ML, ML') into the position of engagement (EL, EL'), wherein the stop block (40, 40') in the assembly position (ML, ML') is not in engagement with the jacket tube (10).

10. Fastening device according to any of claims 7 to 9, **characterised in that** the stop block (40, 40') comprises at least one end-side oblique surface (45, 46, 45', 46') that is arranged in such a way and of such a size that the spring element (50, 50') is guided on the stop block (40, 40').

11. Fastening device according to any of claims 7 to 10, **characterised in that** the spring element (50, 50') in the fastening position of the housing lower part (30) fits against an arresting stop (AA, AA') in such a way that its deflection is blocked and the stop block (40, 40') is secured against slipping out of its position of engagement (EL, EL').

12. Fastening device according to any of claims 1 to 11, **characterised in that** the stop block (40, 40') comprises at least one projection (47, 48, 47', 48') with oblique surfaces which in each case acts in conjunction with a bolt (31, 32, 31', 32') of the housing lower part (30) in order when dismantling the housing lower part (30) from the fastening flange (20) to shift the stop block (20) forcibly from its position of engagement (EL, EL').

13. Fastening device according to any of claims 1 to 12, **characterised in that** assigned to at least one of the stop blocks (40, 40') is an assembly pin (60) which replicates the movement of the stop block (40, 40') and at its position on an outer side (33) of the housing lower part (30) the position of the stop block (40, 40') can be read off.

14. Fastening device according to any of claims 1 to 13, **characterised in that** spring elements (70 to 70""') are provided which after release of the stop block (40, 40') from the position of engagement on the jacket tube (10) push the housing lower part (30) away from the fastening flange (20).

15. Fastening method for a steering column module of a motor vehicle to a jacket tube (10) of its steering spindle (11), in particular using a fastening device according to any of claims 1 to 14, in which the steering module comprises a fastening flange (20) and a housing lower part (30) connectable thereto and in a first step a first joint resistant to twisting and displacement is established between the fastening flange (20) and the jacket tube (10) and in a second step a form-fitting joint is established between the housing lower part (30) and the fastening flange (20) which joint secures the first-named joint against undesired loosening.

## Revendications

1. Dispositif de fixation pour un module de colonne de direction d'un véhicule, avec une partie inférieure de boîtier (30) accouplée à une bride de fixation sensiblement tubulaire (20) et assujettie à un tube-corps (10) d'un arbre de direction (11), la bride de fixation (20) comportant au moins un bloc de verrouillage sollicité élastiquement (40, 40') qui, dans une position de fixation de la bride de fixation (20), pénètre dans un évidement radial associé (12, 12') du tube-corps (10), **caractérisé en ce que** le bloc de verrouillage (40, 40') est monté à déplacement radial auquel un élément élastique (50, 50') conformé en ressort à lame lui est associé.

2. Dispositif de fixation selon la revendication 1, **caractérisé en ce que** le bloc de verrouillage (40, 40') s'engage dans l'évidement (12, 12') de façon à empêcher une rotation et un déplacement radial de la bride de fixation (20) par rapport au tube-corps (10).

3. Dispositif de fixation selon la revendication 1 ou 2, **caractérisé en ce que**, dans la position de fixation, la partie inférieure de boîtier (30) coopère avec la bride de fixation (20), de façon que le bloc de verrouillage (40, 40') soit bloqué à l'encontre d'un glissement hors de sa position de prise (EL, EL') par une butée de sécurité (SA, SA').

4. Dispositif de fixation selon une des revendications 1 à 3, **caractérisé en ce que**, dans la position de fixation contre le tube-corps (10), le bloc de verrouillage (40, 40') est appliqué contre une butée de verrouillage (VA, VA').

5. Dispositif de fixation selon une des revendications 1 à 4, **caractérisé en ce que** le bloc de verrouillage (40, 40') comporte des chanfreins côté prise (41, 42, 41', 42') qui sont disposés et dimensionnés de façon que, lors de la pose de la bride de fixation (20) sur le tube-corps (10) et de sa dépose, le bloc de verrouillage (40, 40') soit poussé hors de sa position de prise (EL, EL').

6. Dispositif de fixation selon une des revendications 1 à 5, **caractérisé en ce qu'**il est prévu deux blocs de verrouillage diamétralement opposés (40, 40').

7. Dispositif de fixation selon une des revendications 1 à 6, **caractérisé en ce qu'**à chaque bloc de verrouillage (40, 40') est associé un ressort à lame, par l'intermédiaire duquel le bloc de verrouillage (40, 40') est poussé élastiquement dans sa position de prise (EL, EL').

8. Dispositif de fixation selon la revendication 7, **caractérisé en ce que** le ressort à lame est disposé sur la partie inférieure de boîtier (30) et, lors de l'assemblage de la partie inférieure de boîtier (30) avec la bride de fixation (20), appuie sur le bloc de verrouillage respectif (40, 40').

9. Dispositif de fixation selon la revendication 8, **caractérisé en ce que** le ressort à lame recouvre élastiquement un côté extrême (44, 44') du bloc de verrouillage (40, 40') afin de pousser celui-ci d'une position de pose (ML, ML') vers la position de prise (EL, EL'), le bloc de verrouillage (40, 40') en position de pose (ML, ML') ne se trouvant pas en prise avec le tube-corps (10).

10. Dispositif de fixation selon une des revendications 7 à 9, **caractérisé en ce que** le bloc de verrouillage (40, 40') comporte au moins un chanfrein d'extrémité (45, 46, 45', 46') qui est disposé et dimensionné, de façon que l'élément élastique (50, 50') soit guidé contre le bloc de verrouillage (40, 40').

11. Dispositif de fixation selon une des revendications 7 à 10, **caractérisé en ce que**, dans la position de fixation de la partie inférieure de boîtier (30), l'élément élastique (50, 50') est appliqué contre une butée d'arrêt (AA, AA'), de façon à limiter son débattement et à empêcher le bloc de verrouillage (40, 40') de glisser hors de sa position de prise (EL, EL').

12. Dispositif de fixation selon une des revendications 1 à 11, **caractérisé en ce que** le bloc de verrouillage (40, 40') comporte au moins une saillie (47, 48, 47', 48') avec des chanfreins, laquelle coopère avec une moulure (31, 32, 31', 32') de la partie inférieure de boîtier (30) afin de déplacer le bloc de verrouillage correspondant (40, 40') de manière forcée hors de sa position de prise (EL, EL') lors de la dépose de la partie inférieure de boîtier (30) par rapport à la bride de fixation (20).

13. Dispositif de fixation selon une des revendications 1 à 12, **caractérisé en ce qu'**à au moins un des blocs de verrouillage (40, 40') est associée une tige de montage (60) qui reproduit le déplacement du bloc de verrouillage (40, 40') et au niveau de laquelle, sur le côté extérieur (33) de la partie inférieure de boîtier (30), peut être lue la position du bloc de verrouillage (40, 40').

14. Dispositif de fixation selon une des revendications 1 à 13, **caractérisé en ce qu'**il est prévu des éléments élastiques (70 à 70""') qui, une fois que le bloc de verrouillage (40, 40') a quitté la position de prise contre le tube-corps (10), éloignent la partie inférieure de boîtier (30) de la bride de fixation (20).

15. Procédé de fixation d'un module de colonne de direction d'un véhicule sur un tube-corps (10) de l'arbre de direction (11) de celui-ci, en particulier en utilisant un dispositif de fixation selon une des revendications 1 à 14, dans lequel le module de colonne de direction comprend une bride de fixation (20) et une partie inférieure de boîtier (30) qui peut y être reliée et, dans une première étape, une première liaison solidaire en rotation et en translation est établie entre la bride de fixation (20) et le tube-corps (10) et, dans une seconde étape, une liaison par complémentarité de formes est établie entre la partie inférieure de boîtier (30) et la bride de fixation (20) et protège la première liaison contre une désolidarisation accidentelle.
